(19) **Europäisches Patentamt**
**European Patent Office**
**Office européen des brevets**

(11) **EP 4 271 104 A2**

(12) **EUROPEAN PATENT APPLICATION**

(43) Date of publication:
**01.11.2023 Bulletin 2023/44**

(21) Application number: **23169507.3**

(22) Date of filing: **24.04.2023**

(51) International Patent Classification (IPC):
**H04W 72/23** $^{(2023.01)}$          **H04W 74/08** $^{(2009.01)}$

(52) Cooperative Patent Classification (CPC):
**H04W 72/23; H04W 74/0833**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022 US 202263336814 P**

(71) Applicant: **Apple Inc.**
**Cupertino, CA 95014 (US)**

(72) Inventors:
  • **YE, Chunxuan**
    **Cupertino, California, 95014 (US)**
  • **YAO, Chunhai**
    **Cupertino, California, 95014 (US)**
  • **ZHANG, Dawei**
    **Cupertino, California, 95014 (US)**

  • **SUN, Haitong**
    **Cupertino, California, 95014 (US)**
  • **HE, Hong**
    **Cupertino, California, 95014 (US)**
  • **OTERI, Oghenekome**
    **Cupertino, California, 95014 (US)**
  • **FAKOORIAN, Seyed Ali Akbar**
    **Cupertino, California, 95014 (US)**
  • **ZENG, Wei**
    **Cupertino, California, 95014 (US)**
  • **YANG, Weidong**
    **Cupertino, California, 95014 (US)**
  • **ZHANG, Yushu**
    **Cupertino, California, 95014 (US)**

(74) Representative: **Simmons & Simmons**
**City Point**
**One Ropemaker Street**
**London EC2Y 9SS (GB)**

(54) **TECHNOLOGIES FOR ENHANCED COVERAGE IN DOWNLINK RANDOM ACCESS TRANSMISSIONS**

(57)    The present application relates to devices and components including apparatus, systems, and methods for enhanced downlink coverage in random access channel procedures in wireless networks.

FIG. 1

## Description

### CROSS-REFERENCE TO RELATED APPLICATIONS

This application claims priority to U.S. Provisional Application 63/336,814 filed April 29, 2022, which is hereby incorporated by reference in its entirety.

### FIELD

This application relates to the field of wireless networks and, in particular, to technologies for enhanced coverage in downlink random access transmission in said networks.

### BACKGROUND

Non-terrestrial networks (NTNs) may be associated with large propagation delays and satellite movement that may compromise network coverage. Network coverage provided by NTNs may need to accommodate use cases in which voice and low-data rate services use commercial smart phones, which may have antenna gains less than those currently assumed for NTN link budget analysis. Network coverage evaluation should also take into account any related regulatory requirements such as, for example, International Telecommunication Union (ITU) limitations on power flux density.

### BRIEF DESCRIPTION OF THE DRAWINGS

FIG. 1 illustrates a network environment in accordance with some embodiments.

FIG. 2 illustrates an operation flow/algorithmic structure in accordance with some embodiments.

FIG. 3 illustrates another operation flow/algorithmic structure in accordance with some embodiments.

FIG. 4 illustrates flow diagrams in accordance with some embodiments.

FIG. 5 illustrates another operation flow/algorithmic structure in accordance with some embodiments.

FIG. 6 illustrates another operation flow/algorithmic structure in accordance with some embodiments.

FIG. 7 illustrates another operation flow/algorithmic structure in accordance with some embodiments.

FIG. 8 illustrates a user equipment in accordance with some embodiments.

FIG. 9 illustrates a gNB in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B).

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

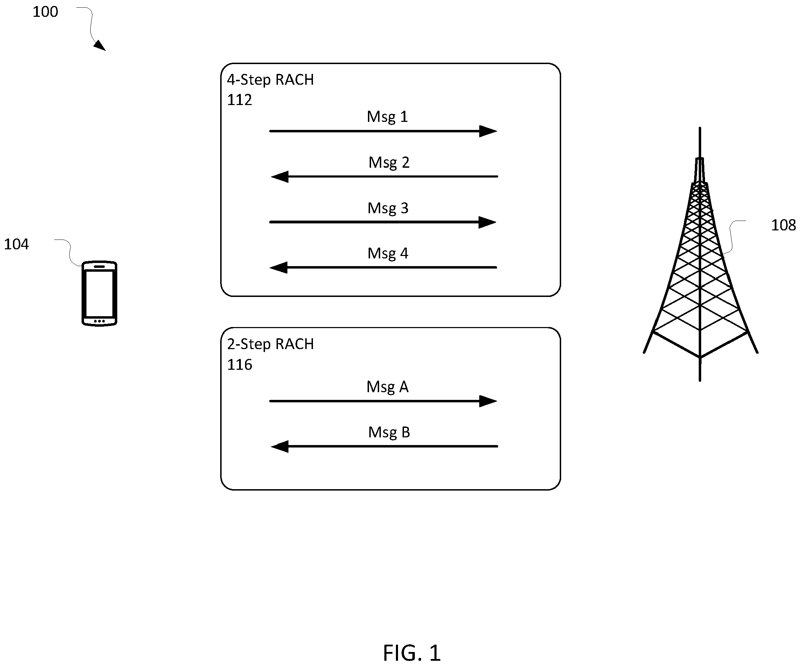

FIG. 1 illustrates a network environment 100 in accordance with some embodiments. The network environment 100 may include UE 104 and a base station 108. The base station 108 may provide one or more wireless access cells, for example, new radio (NR) cells, through which the UE 104 may communicate with the base station 108. The UE 104 and the base station 108 may communicate over air interfaces compatible with Fifth Generation (5G) NR system standards as provided by 3GPP technical specifications. The base station 108 may be a next generation node B (gNB) that provides one or more 5G NR cells to provide NR user plane and control plane protocol terminations toward the UEs 104.

In some embodiments, the network environment 100 may include a terrestrial radio access network (RAN) or a non-terrestrial RAN (NTN). With a terrestrial RAN, the base station 108 and other components of the RAN may be on the ground (including buildings, towers, and other structures). With NTNs, at least one component of the RAN may be deployed on a non-terrestrial device (for example, a satellite). The non-terrestrial device may include the base station 108, itself, or a device that is in communication with the base station 108 and the UE 104.

NTNs may be associated with a number of challenges in providing sufficient access to the base station 108. Consider, for example, power flux density (PFD) limitations on the S-band (2483.5 - 2500 MHz), which may be used as a downlink band for NTNs. A geosynchronous orbit (GSO) device (for example, the space station) may have a PFD: P = - 146 dB (W/m$^2$) in 4 kHz and -128 dB (W/m$^2$) in 1 MHz, with r = 0.5 (dB/degree), wherein P and r are power flux density calculation factors. A non-GSO device may have a PFD: P = - 144 dB (W/m$^2$) in 4 kHz and -126 dB (W/m$^2$) in 1 MHz, with r = 0.65. In some regions a non-GSO device may have a PFD: P = -142.5 dB (W/m$^2$) in 4 kHz and -124.5 dB (W/m$^2$) in 1 MHz. *PFD = P for $0° \leq \delta \leq 5°$; PFD = P + r($\delta$ - 5), for $5° < \delta \leq 25°$; PFD = P + 20r, for $25° \leq \delta \leq 90°$,* where $\delta$ is an elevation angle.

The downlink transmission power or effective isotropic radiated power (EIRP) in the S-band may not be large enough to cover a whole cell of a satellite. Thus, coverage enhancement for the downlink channel may be desired in these situations.

The UE 104 may utilize a random-access channel (RACH) procedure to access resources provided by the base station 108. The RACH procedure may be a four-step RACH procedure 112 or a two-step RACH procedure 116.

The four-step RACH procedure 112 may be as follows. In a first step, the UE 104 may randomly select a preamble from a pool of shared preambles and transmit the preamble to the base station 108 in a first message (Msg1), which may also be referred to as a physical random access channel (PRACH) transmission. In a second step, the base station 108 may respond to the first message by transmitting a random-access response (RAR) in a second message (Msg 2). The physical downlink shared channel (PDSCH) transmission of the RAR may be scheduled by a DCI format 1_0 with a cyclic redundancy check (CRC) scrambled by random access (RA)-radio network temporary identity (RNTI). The RAR may include a random access preamble identifier, timing alignment information, an RAR uplink grant to schedule a physical uplink shared channel (PUSCH) transmission (Msg3), and temporary C-RNTI (TC-RNTI). If the UE 104 receives a PDCCH with the RAR within a defined time window (referred to as an RAR window), and the RAR includes a preamble identifier that corresponds to the preamble transmitted in Msg1, the response is successful. Then, in the third step, the UE 104 may send the scheduled uplink transmission over a PUSCH in a third message (Msg3). The third message may include an ID for contention resolution. In the fourth step, the base station 108 may send the contention resolution ID in a fourth message (Msg4) that, if properly decoded by the accessing device, may complete the procedure.

The two-step RACH procedure 116 may be as follows. In a first step, the UE 104 may transmit a first message (MsgA) that includes a PRACH preamble transmission and a PUSCH transmission. Thus, MsgA represents a combination of Msg1 and Msg3 of the four-step RACH procedure 112. In a second step, the base station 108 may respond with a second message (MsgB) that includes both RAR and contention resolution content. Thus, MsgB represents a combination of Msg2 and Msg4 of the four-step procedure.

The downlink coverage challenges associated with NTNs may limit the coverage of the Msg2/MsgB transmissions of a RACH procedure. Various embodiments describe enhancements to coverage of Msg2/MsgB. These enhancements may be used in both terrestrial RANs and NTNs.

In some aspects, enhanced coverage may be provided to the DCI format 1_0 that is used to schedule the Msg2/MsgB transmission. This may be done by providing an enhanced coverage (EC) DCI format 1_0 that has a reduced payload size as compared to a DCI format 1_0 that schedules RAR in legacy RACH procedures. Additionally/alternatively, the EC DCI format 1_0 may use fixed/reinterpreted field values to improve coding gain. Embodiments describe the content and triggering of the EC DCI format 1_0.

In further aspects, enhanced coverage may be provided to the Msg2/MsgB PDSCH transmission. This may be done by using Msg2/MsgB PDSCH repetition. Additionally/alternatively, payload size of the Msg2/MsgB PDSCH may be reduced.

In some embodiments, the base station 108 may detect a condition that triggers the use of the EC DCI format 1_0 for Msg2/MsgB. For example, the condition may be based on a signal strength of the PRACH transmission received by the base station 108. For example, the base station 108 may calculate the signal strength of the Msg1 transmission and compare the calculated signal strength to a predetermined threshold. If the calculated signal strength is less than the predetermined threshold, the base station 108 may decide to transmit the EC DCI format 1_0 for Msg2/MsgB. In this situation, the UE 104 may not have knowledge of whether the DCI is to be transmitted with legacy DCI format 1_0 or the EC DCI format 1_0. Thus, the UE 104 may need to perform blind decoding of the EC DCI format 1_0 and, potentially, the legacy DCI format 1_0 as well.

In other embodiments, the UE 104 may first detect an EC condition that triggers the use of the EC DCI format 1_0 for Msg2/MsgB. Once detected, the UE 104 may provide an indication of such to the base station 108.

In some embodiments, the UE 104 may detect the EC condition by determining that the UE 104 has failed to decode the RAR with the PRACH transmission a number of times that is greater than a predetermined number. The predetermined number may be predefined in, for example, a 3GPP technical specification (TS), or may be configured to the UE 104 by the network.

In some embodiments, the UE 104 may detect the EC condition based on a distance between the UE 104 and an NTN device. The UE 104 may determine the distance based on, for example, global navigation satellite system (GNSS) location information related to both the UE 104 and the NTN device. The GNSS location of the NTN device may be based on broadcast satellite ephemeris information. If the distance is greater than a predetermined threshold, the UE 104 may detect the EC condition.

In some embodiments, the UE 104 may detect the EC condition based on a distance between the UE 104 and a timing reference point. The timing reference point may be a point on a feeder link that is between the satellite and the base station 108. This distance between the UE 104 and the timing reference point may be approximated based on half a summation of a common timing advance (TA), $N_{TA, common}$. that is configured by the network for the TA between the satellite and the timing reference point, and a UE-specific TA between UE and the satellite, which may be calculated by GNSS location of the UE and broadcast satellite ephemeris information. If the distance between the UE 104 and the timing reference point is greater than a predetermined threshold, the UE 104 may detect the EC condition. In other embodiments, the common TA may be compared directly to a predetermined threshold TA to determine whether the EC condition is present.

In some embodiments, the UE 104 may detect the EC condition based on characteristics of a downlink pathloss reference. For example, the UE 104 may determine a reference signal receive power (RSRP) of a downlink pathloss reference signal transmitted by the base station 108. The downlink pathloss reference signal may be a synchronization signal physical broadcast channel (SSB) transmission or a channel state information - reference signal (CSI-RS). If the RSRP of the downlink pathloss reference signal is less than a predetermined RSRP threshold, the UE 104 may detect the EC condition.

Upon detecting the EC condition, the UE 104 may send an explicit request to the base station 108 to use the EC DCI format 1_0 for Msg2/MsgB. The UE 104 may send the request using the PRACH transmission.

In some embodiments, the network may dedicate PRACH preambles or RACH occasions for use in triggering an EC RACH procedure. These dedicated PRACH preambles or RACH occasions may be provided to the UE 104 in a RACH configuration, which may be signaled in a SIB transmission, for example, a SIB type 1 (SIB 1).

The UE 104 may transmit a dedicated PRACH preamble in Msg 1 to request the base station 108 to use an EC DCI format 1_0. In some embodiments, the dedicated PRACH preamble may additionally/alternatively be used to request Msg 2 or even Msg3 repetition. Upon receiving the dedicated PRACH preamble that serves as a request for the EC DCI format 1_0 for Msg2/MsgB, the base station 108 may respond with the same.

In some embodiments, the UE 104 may transmit a PRACH preamble ofMsg1 using a dedicated RACH occasion to request the base station 108 to use an EC DCI format 1_0. Upon receiving the PRACH preamble in the dedicated RACH occasion, the base station 108 may respond with the EC DCI format 1_0.

With the triggering of the EC DCI format 1_0 (or Msg2/MsgB repetition), the UE 104 may need to decode the EC DCI format 1_0 differently from legacy DCI format 1_0. In some embodiments, the EC DCI format 1_0 Msg2/MsgB may include a size or bit field modification. For example, one of the reserved bits in the DCI may be set to ' 1' to provide the UE 104 an indication that it is to interpret the DCI based on the EC interpretation. If the reserved bit is set to '0,' the UE 104 may determine that the legacy interpretation is to be used, for example, the DCI is a legacy DCI format 1_0 and there is no Msg2 repetition.

In one option, this format signaling may be used by the UE decoding the DCI as a whole first, based on an assumed payload size. Then, based on the first decoded bit, the UE may determine whether the DCI has an EC DCI format or a legacy DCI format, which may help the interpretation of the remaining fields. In another option, the UE may decide the first bit of the DCI, which may be possible using the successive cancelation list decoding algorithm of Polar decoding.

In some embodiments, no further signaling may be needed. For example, after the UE 104 sends the request, the UE 104 may autonomously assume that the EC DCI format 1_0 (with or without Msg2 repetition) is used.

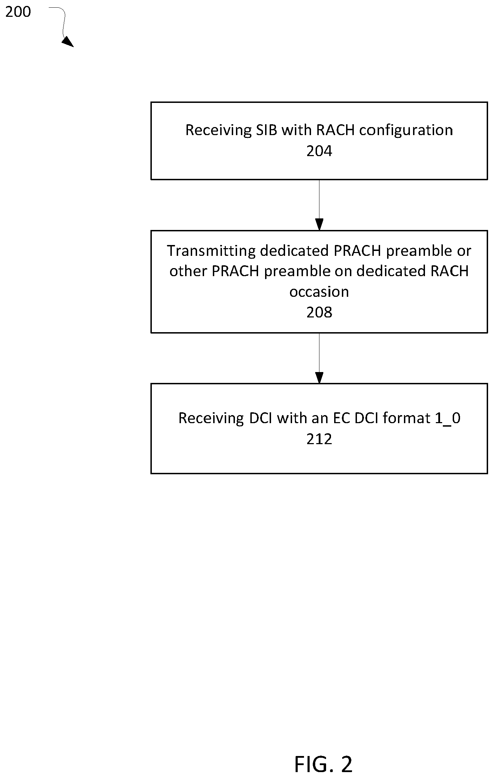

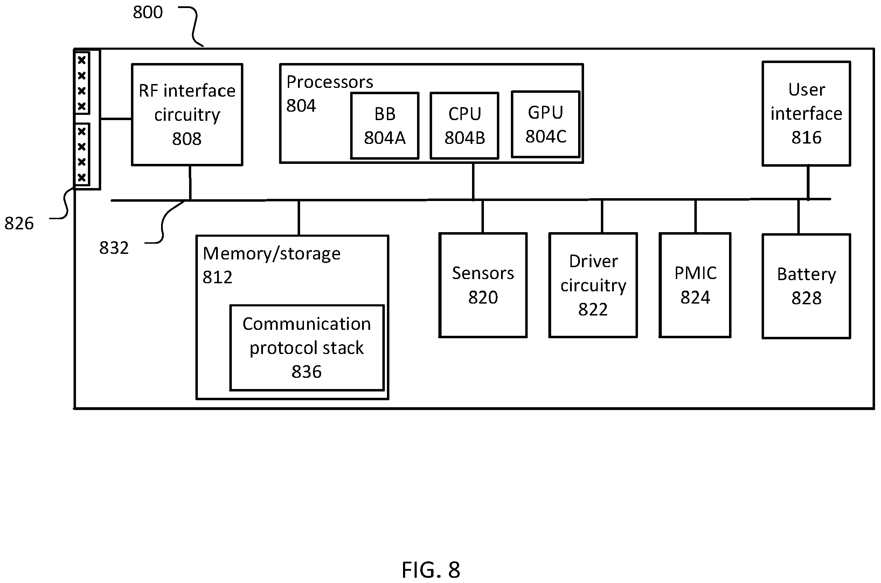

FIG. 2 is an operation flow/algorithmic structure 200 in accordance with some embodiments. The operation flow/algorithmic structure 200 may be implemented by the UE 104 or UE 800 of FIG. 8; or components thereof such as baseband processor circuitry 804A.

The operation flow/algorithmic structure 200 may include, at 204, receiving a SIB with a RACH configuration. The RACH configuration may define PRACH preambles or RACH occasions that are dedicated for use to request EC operations.

The operation flow/algorithmic structure 200 may further include, at 208, transmitting a dedicated PRACH preamble or another (for example, legacy) PRACH preamble on a dedicated RACH occasion. This may be done upon detection of an EC triggering condition.

The operation flow/algorithmic structure 200 may further include, at 212, receiving DCI with the EC DCI format 1_0. The DCI may be identified as having the EC DCI format 1_0 based on a signal in the DCI or may be assumed based on transmission of the dedicated PRACH preamble or transmission of the other PRACH preamble on a dedicated RACH occasion. The received DCI may be decoded based on the EC interpretation.

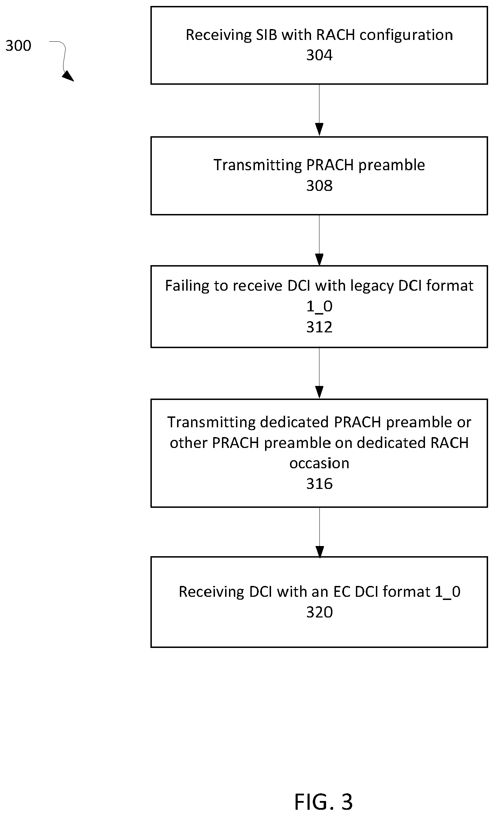

FIG. 3 is an operational flow/algorithmic structure 300 in accordance with some embodiments. The operation flow/algorithmic structure 300 may be implemented by the UE 104 or UE 800 of FIG. 8 or components thereof such as baseband processor circuitry 804A.

The operation flow/algorithmic structure 300 may include, at 304, receiving a SIB with a RACH configuration. The RACH configuration may define PRACH preambles or RACH occasions that are dedicated for use to request EC operations.

The operation flow/algorithmic structure 300 may further include, at 308, transmitting a legacy PRACH preamble. At this point, no EC trigger may have been detected.

The operation flow/algorithmic structure 300 may further include, at 312, failing to receive DCI with legacy DCI format 1_0. Detection of this event may constitute the EC trigger.

The operation flow/algorithmic structure 300 may further include, at 316, transmitting a dedicated PRACH preamble or another (for example, legacy) PRACH preamble on a dedicated RACH occasion.

The operation flow/algorithmic structure 200 may further include, at 320, receiving DCI with the EC DCI format 1_0. The DCI may be identified as having the EC DCI format 1_0 based on a signal in the DCI or may be assumed based on transmission of the dedicated PRACH preamble or transmission of the other PRACH preamble on a dedicated RACH occasion. The received DCI may be decoded based on the EC interpretation.

The EC DCI format 1_0 for Msg2/MsgB reception may be designed to increase reliability. This may be accomplished by reducing its size or fixing fields to improve decoding performance.

In some embodiments, when the EC DCI format 1_0 is scrambled by RA-RNTI, MsgB-RNTI, or a reduced-DCI-payload-size RA-RNTI (R-RA-RNTI), which may be specifically configured to indicate EC DCI format, it may have the following fields and field sizes.

The EC DCI format 1_0 may include a frequency domain resource assignment field having a length of

$$\left\lceil \log_2\left(\frac{N_{RB}(N_{RB}+1)}{2}\right) \right\rceil$$

bits, where $N_{RB}$ is a number of resource blocks of the downlink bandwidth part in which the PDSCH is to be transmitted. This field may allocate a set of resource blocks for the PDSCH.

The EC DCI format 1_0 may include a time domain resource assignment (TDRA) field that defines a pointer toward a row in a PDSCH TDRA table. Each row may define a slot offset, the PDSCH mapping type, starting symbol and number of allocated symbols. In some embodiments, only the first $2^X$ entries in an existing configured cell-specific PDSCH TDRA table may be used, where $X \leq 4$. In other embodiments, a dedicated Msg2/MsgB PDSCH TDRA table may be configured with a total number of entries less than or equal to 16 ($X \leq 4$).

The EC DCI format 1_0 may not include a virtual resource block (VRB)-to-physical resource block (PRB) field/value. Instead, the VRB-to-PRB mapping may be configured (for example, enabled or disabled) via a SIB transmission.

The EC DCI format 1_0 may not include a modulation coding scheme (MCS) field/value. Instead, the MCS value may be configured via a SIB transmission.

The EC DCI format 1_0 may include a transport block (TB) scaling field having a length of two bits. The TB scaling field may configure a scaling factor that may be applied when determining the transport block size (TBS) for the Msg2 transmission. In some embodiments, the TB scaling field may be set to ' 1 1' to indicate a scaling factor, S, smaller than 0.25 (for example, S = 0.125).

The EC DCI format 1_0 may include a Msg2/MsgB repetition number field to indicate a number of PDSCH repetitions to be used for the Msg2/MsgB transmission.

In some embodiments, padding bits may be added to provide a minimum payload of 12 bits to ensure the transmission is properly encoded by a polar code.

In some embodiments, in addition to (or as an alternative from) reducing the field or field size of the EC DCI format 1_0, one or more of the fields in the EC DCI format 1_0 may be set to a fixed value. These fields will not be used to convey bit information corresponding to their respective fields, but instead, they may provide known information for better polar code decoding performance for PDCCH. This may be done by setting a certain number of the least significant bits (LSBs) or most significant bits (MSBs) of the MCS field or TDRA field to 0; setting the TB scaling field to a fixed value (for example, '10' to indicate small TB scaling factor); setting all reserved bits to '0'; or fixing the VRB-to-PRB mapping bit to 0.

In some embodiments, PDSCH repetition may be used to increase the reliability of Msg2/MsgB PDSCH transmissions. The triggering of the Msg2/MsgB PDSCH repetition may be bundled with the EC DCI format 1_0 for Msg2/MsgB. For example, the base station 108 may only use PDSCH repetition for the Msg2/MsgB transmissions if they are scheduled by EC DCI format 1_0. If legacy DCI format 1_0 schedules a Msg2/MsgB transmission, PDSCH repetition may not be applied.

Additionally/alternatively, the triggering of the Msg2/MsgB PDSCH repetition may be bundled with the dedicated PRACH preamble or dedicated RACH occasions that request the EC DCI format 1_0. If the UE 104 sends the dedicated PRACH preamble or dedicated RACH occasions, then the base station 108 may apply Msg2/MsgB PDSCH repetition. If the UE 104 sends a legacy PRACH preamble using a legacy RACH occasion, the base station 108 may not apply Msg2/MsgB PDSCH repetition.

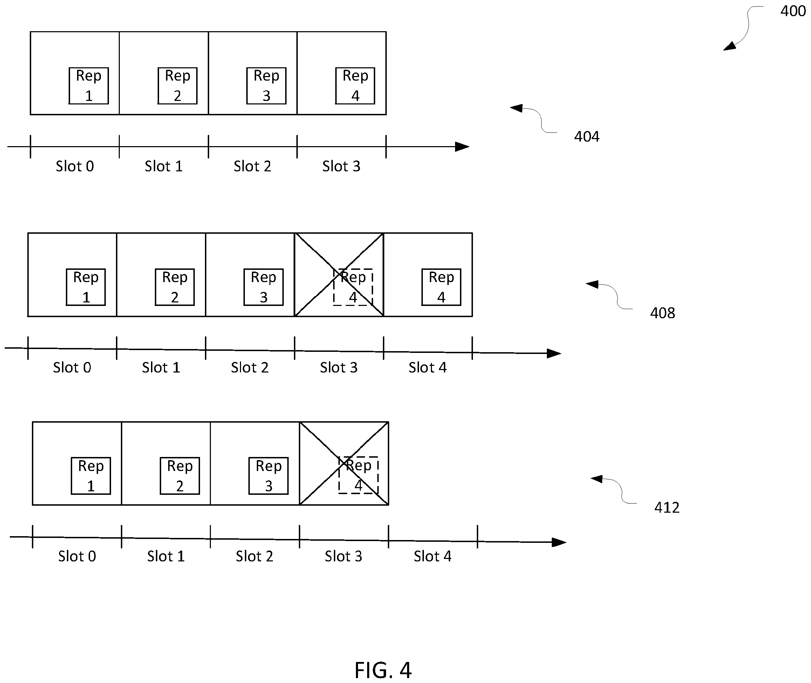

FIG. 4 illustrates signaling diagrams 400 representing PDSCH repetition schemes in accordance with some embodiments.

Signaling diagram 404 illustrates an embodiment having four, slot-level Msg2/MsgB PDSCH repetitions, illustrated as Rep 1, Rep 2, Rep 3, and Rep 4 transmitted in respective slots. Each repetition may use the same time and frequency resources of a respective slot.

In some instances, a resource conflict may occur at one or more transmission occasions that would initially be set for the PDSCH repetitions. These conflicts may be addressed as follows in accordance with some embodiments.

Signaling diagram 408 illustrates an embodiment having four, slot-level Msg2/MsgB PDSCH repetitions similar to signaling diagram 404. However, in this instance, there may be a resource conflict with respect to Rep 4 in slot 3. This may occur if, for example, the transmission occasion for Rep 4 overlaps with an SSB transmission or a control resource set (COREST), or if slot 3 is an uplink slot. In this embodiment, the transmission occasion for Msg2/MsgB PDSCH repetition at slot 3 would not be counted. Instead, the transmission occasion would advance to the next available slot, for example, slot 4. Thus, Rep 4 would be transmitted in slot 4.

Signaling diagram 412 illustrates an embodiment having four, slot-level Msg2/MsgB PDSCH repetitions configured similar to signaling diagram 404. However, in this instance, there may be a resource conflict with respect to Rep 4 in slot 3 (similar to signaling diagram 408. In this embodiment, the configured PDSCH repetition would simply be dropped. Thus, while four PDSCH repetitions are configured, only three are actually sent in this instance.

Each PDSCH repetition may use common or different redundancy versions (RVs), which correspond to the puncturing pattern used after channel coding. For example, in some embodiments, the PDSCH repetitions may start with RV 0 and cycle through an RV sequence, which may be fixed (by 3GPP TS, for example) or configured by the network. Consider, for example, an RV sequence [0 2 3 1]. In this example, and with respect to signaling diagram 404, Rep 1 may be transmitted with RV 0, Rep 2 may be transmitted with RV 2, Rep 3 may be transmitted with RV 3, and Rep 4 may be transmitted with RV 1. The cycle may then repeat, if necessary. For example, if a fifth repetition were sent, it would be transmitted with RV 0.

In some embodiments, the RV cycling for Msg2/MsgB PDSCH repetition may be based on originally configured transmission occasions. For example, referring to signaling diagram 408, the originally configured transmission occasion for Rep 4 corresponds to slot 3, which may be associated with RV 1 (based on example RV sequence provided above). Thus, when Rep 4 is transmitted in slot 4, it is transmitted with RV 1.

In other embodiments, the RV cycling for Msg2/MsgB PDSCH repetition may be based on transmission occasion used to transmit the repetition. For example, referring to signaling diagram 408, the Rep 4 is transmitted in the transmission occasion corresponding to slot 4, which may be associated with RV 0 (based on the second cycle of example RV sequence provided above). Thus, when Rep 4 is transmitted in slot 4, it is transmitted with RV0.

The timing of the Msg 3 transmission from the UE 104 may be based on reception of Msg2. For example, the PUSCH slot for the Msg3 transmission may start at $n + K2$, where $n$ is the slot in which the Msg2 PDSCH is received and $K2$ is indicated by the UL grant. In the event Msg2 PDSCH repetition is used, further definition of the reference slot $n$ may be desired. Here, the timing relationship enhancement may be assumed to align uplink slot index and downlink slot index.

In some embodiments, the reference slot n may be defined as the last nominal PDSCH transmission slot. The nominal PDSCH transmission slots may be the slots originally intended for transmitting the PDSCH repetitions, even if no PDSCH repetition is transmitted in that slot due to a resource conflict. For example, with respect to signaling diagram 408, the reference slot n may correspond to slot 3, which is the last nominal PDSCH transmission slot, even though Rep 4 was not transmitted in the slot due to the resource conflict.

In other embodiments, the reference slot n may be defined as the last slot in which a PDSCH repetition was transmitted. For example, with respect to signaling diagram 408, the reference slot n may correspond to slot 4.

In some embodiments, the base station 108 may signal, to the UE 104, an indication of the number of Msg2/MsgB PDSCH repetitions that are to be transmitted. In some embodiments, this indication may be signaled using an MCS field. For example, X MSBs of the MCS field in EC DCI 1_0 for Msg2/MsgB may be used to indicate the number of Msg2/MsgB repetitions. In a first option, this indication in the MCS field may be a direct indication of, for example, $1{:}2^X$ repetitions. In a second option, the X MSBs of the MCS field may be used to indicate an entry index of a table of Msg2/MsgB PDSCH repetitions. The entry index may be associated with an entry that provides the number of Msg2/MsgB repetitions. The table, which may be configured by a SIB transmission, may be used to indicate both Msg2/MsgB PDSCH repetitions and Msg3 PUSCH repetitions. In other embodiments, separate tables may be used to indicate Msg2/MsgB PDSCH repetitions and Msg3 PUSCH repetitions.

In some embodiments, the indication of the number of Msg2/MsgB PDSCH repetitions may be signaled using a TDRA field. In a first option, the base station 108 may use a SIB to configure a new TDRA table for Msg2/MsgB PDSCH configurations. Each table entry of the new TDRA table may include a number of repetitions. In a second option, the base station 108 may use a SIB to modify or extend an existing cell-specific TDRA table (for example, *PDSCH-configCommon* with *PDSCH-TimeDomainResourceAllocation)*. The existing cell-specific TDRA table may be modified/extended in a manner such that each table entry includes the number of repetitions.

In some embodiments, the RAR window (for example, ra-ResponseWindow or MsgB-ResponseWindow) may be extended in order to receive the Msg2/MsgB PDSCH repetitions. If the UE 104 determines that Msg2/MsgB PDSCH repetition is expected, the UE 104 may autonomously extend the RAR window size. The window extension may be based on the number of PDSCH repetitions or a value configured by, for example, a SIB transmission.

As briefly introduced above, Msg2/Msg2 PDSCH may include a RAR uplink grant to schedule a PUSCH transmission (Msg3) from the UE 104. To improve reliability of the Msg2/MsgB PDSCH transmission, the sized of the RAR UL grant (and hence the Msg2/MsgB payload) may be reduced as compared to legacy RAR UL grants.

The triggering of the reduced-size RAR grant may be bundled with the EC DCI format 1_0 for Msg2/MsgB. For example, the base station 108 may only use the reduced-size RAR grant within the PDSCH payload if the PDSCH is scheduled by EC DCI format 1_0. If legacy DCI format 1_0 schedules the PDSCH, the RAR grant may be assumed to be legacy sized.

Additionally/alternatively, the triggering of the reduced-size RAR grant may be bundled with the dedicated PRACH preamble or dedicated RACH occasions that request the EC DCI format 1_0. If the UE 104 sends the dedicated PRACH preamble or sends a PRACH preamble on dedicated RACH occasions, then the base station 108 may use the reduced-size RAR grant. If the UE 104 sends a legacy PRACH preamble using a legacy RACH occasion, the RAR grant may be assumed to be legacy sized.

The reduced-sized RAR grant may include a frequency hopping flag field having a length of one bit. If the bit is set to '0,' the PUSCH may be scheduled without frequency hopping. If the bit is set to '1,' the PUSCH may be scheduled with frequency hopping.

The reduced-sized RAR grant may include a PUSCH frequency resource allocation field that has a flexible field size based on a size of an initial uplink bandwidth part.

The reduced-sized RAR grant may include a PUSCH time resource allocation that is a configurable size. The size may be configured based on the configured TDRA table.

In some embodiments, a value of an MCS to use for the scheduled PUSCH may be predefined (by a 3GPP TS, for example) or separately configured by the network. In these embodiments, the MCS may not need to be signaled in the reduced-sized RAR grant. Thus, the MCS field/value may be omitted from the reduced-sized RAR grant. In some embodiments, the MCS field may be used as a field (having two bits, for example) used to indicate a number of repetitions of the Msg3 PUSCH transmission.

In some embodiments, a value of a transmit power control (TPC) command for the PUSCH may be predefined (by a 3GPP TS, for example) or separately configured by the network. In some instances, the TPC command may be predefined as 8 dB, for example.

In some embodiments, the reduced-sized RAR grant may omit the CSI request field.

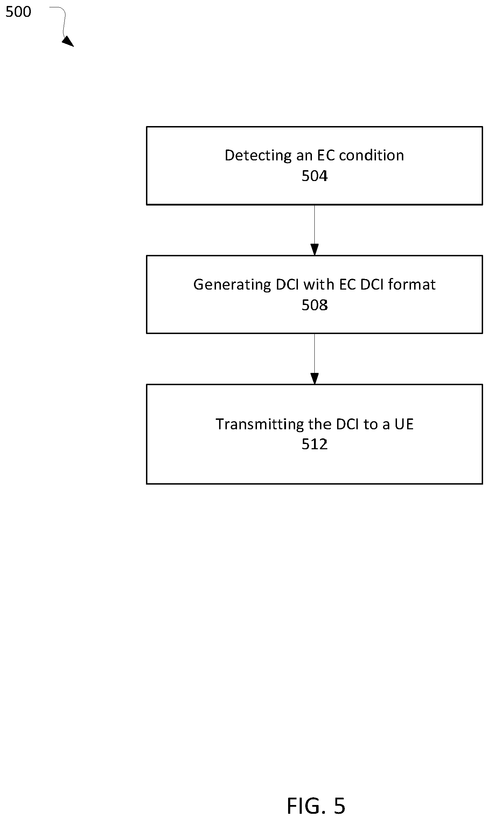

FIG. 5 may include an operation flow/algorithmic structure 500 in accordance with some embodiments. The operation flow/algorithmic structure 500 may be performed or implemented by a base station such as, for example, base station 108 or gNB 900; or components thereof, for example, baseband processor 904A.

The operation flow/algorithmic structure 500 may include, at 504, detecting an EC condition. In some embodiments, the EC condition may be first detected by the base station. For example, the base station may measure a signal strength of a PRACH transmission received from the UE. If the signal strength is less than a predetermined threshold, the base station may detect the EC condition. In other embodiments, the EC condition may be first detected by the UE and may be signaled to the base station. For example, the UE may signal a request for EC procedures by sending a dedicated PRACH preamble or using a dedicated RACH occasion. The base station may detect the EC condition based on the reception of the dedicated PRACH preamble or use of the dedicated RACH occasion.

The operation flow/algorithmic structure 500 may further include, at 508, generating DCI with an EC DCI format. The EC DCI format have a size that is less than a size of a legacy DCI format 1_0 used to schedule a random access response.

The EC DCI format may have: an FDRA field with a length $\left\lceil \log_2(\frac{N_{RB}(N_{RB}+1)}{2}) \right\rceil$ bits, where $N_{RB}$ is a number of resource blocks in a downlink bandwidth part; or a TDRA field with value: corresponding to one of a first $2^X$ entries of a cell-specific PDSCH TDRA table, where X<=4, or corresponding to an entry of an EC PDSCH TDRA table that has a total number of entries less than or equal to 16.

In some embodiments, the reduced size of the EC DCI format may at least partially be enabled by SIB transmission of information that is typically transmitted in the DCI. This information may include, for example, indications of: whether VRB-to-PRB mapping is enabled or disabled for the second message of the RA procedure; or an MCS that is to be used for the second message of the RACH procedure.

In some embodiments, the EC DCI format may include one or more fixed values. These values may be known to both the base station and the UE and may be used to increase accuracy of the decoding operation performed by the UE. The fixed values may be in the MCS field, the TDRA field, the TB scaling field, the reserved bit field, or the VRB-to-PRB mapping field. The operation flow/algorithmic structure 500 may further include, at 512, transmitting the DCI to a UE.

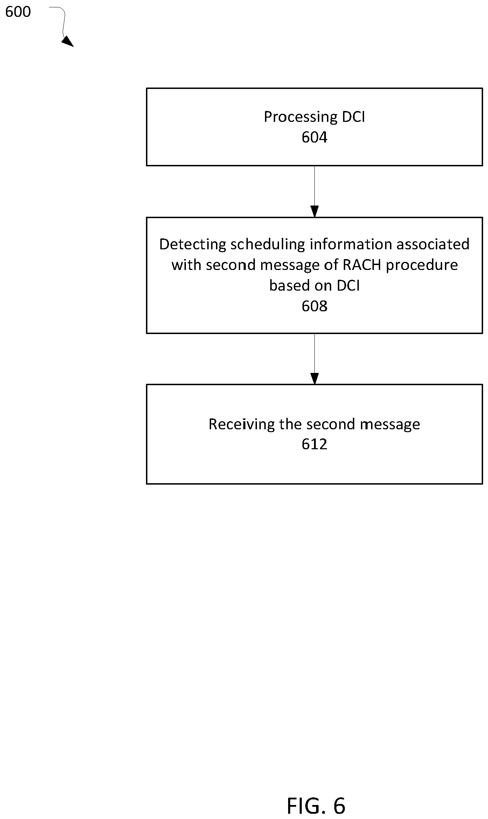

FIG. 6 may include an operation flow/algorithmic structure 600 in accordance with some embodiments. The operation flow/algorithmic structure 600 may be performed or implemented by a UE such as, for example, UE 104 or 800; or components thereof, for example, baseband processor circuitry 804A

The operation flow/algorithmic structure 600 may include, at 604, processing DCI. The UE may process the DCI based on determination that the DCI has an EC DCI format. This determination may be made based on an initial processing of the DCI or based on an assumption due to, for example, a previous detection of an EC condition by the UE.

In some embodiments, the detection of the EC condition may be based on the UE determining a number of unsuccessful attempts at decoding an RAR is greater than a predetermined threshold; determining a distance between the UE and an NTN access device (for example, a satellite) is greater than a predetermined threshold; determining a distance between the UE and a timing reference point is greater than a predetermined threshold; or determining a reference signal received power of a downlink pathloss reference is less than a predetermined threshold. After the UE detects the EC condition, it may provide the base station with an indication of the same by using a dedicated PRACH preamble or a dedicated RACH occasion.

The operation flow/algorithmic structure 600 may further include, at 608, detecting scheduling information associated with a second message of a RACH procedure based on the DCI.

The operation flow/algorithmic structure 600 may further include, at 612, receiving the second message.

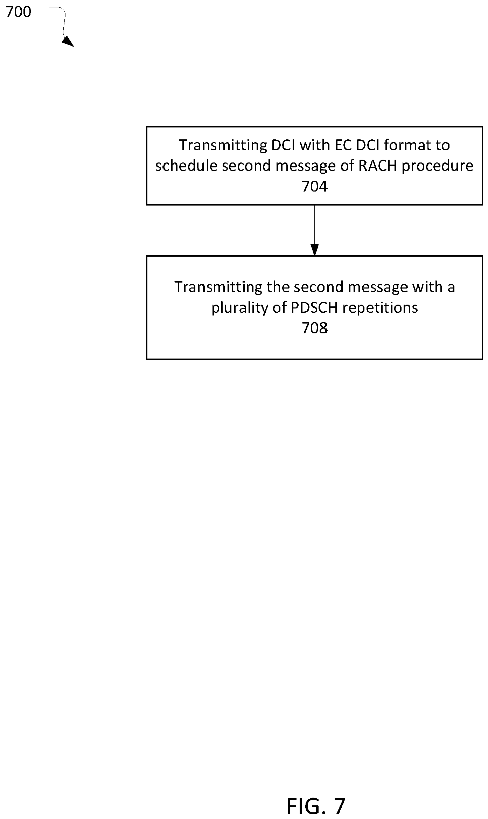

FIG. 7 may include an operation flow/algorithmic structure 700 in accordance with some embodiments. The operation flow/algorithmic structure 700 may be performed or implemented by a base station such as, for example, base station 108 or gNB 900; or components thereof, for example, baseband processor 904A.

The operation flow/algorithmic structure 700 may include, at 704, transmitting DCI with an EC DCI format to schedule a second message of a RACH procedure.

The operation flow/algorithmic structure 700 may further include, at 708, transmitting the second message with a plurality of PDSCH repetitions. The plurality of PDSCH repetitions may be transmitted in a corresponding plurality of slots.

In some embodiments, the base station may determine the second message is to be transmitted with a first plurality of PDSCH repetitions using a first plurality of resources. However, the base station may detect a resource conflict with respect to a first resource of the first plurality of resources that is to be used to transmit a PDSCH repetition of the first plurality of repetitions. In some instances, the base station may drop the PDSCH repetition, and transmit a second plurality of repetitions that is less than the first plurality. In other instances, the base station may transmit the PDSCH repetition on a second resource, which was not part of the first plurality of resources. In this case, the number of PDSCH repetitions transmitted may be equal to the first plurality, but at least one of the repetitions may be transmitted on a different resource than the one originally intended.

In some embodiments, the base station may transmit the plurality of PDSCH repetitions with one or more RVs. In one example, all the PDSCH repetitions may be transmitted with the same RV. In another example, the RV used for consecutive PDSCH repetitions may be cycled based on an RV sequence.

FIG. 8 illustrates an example UE 800 in accordance with some embodiments. The UE 800 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices. In some embodiments, the UE 800 may be a RedCap UE or NR-Light UE.

The UE 800 may include processors 804, RF interface circuitry 808, memory/storage 812, user interface 816, sensors 820, driver circuitry 822, power management integrated circuit (PMIC) 824, antenna structure 826, and battery 828. The components of the UE 800 may be implemented as integrated circuits (ICs), portions thereof, discrete electronic devices, or other modules, logic, hardware, software, firmware, or a combination thereof. The block diagram of FIG. 8 is intended to show a high-level view of some of the components of the UE 800. However, some of the components shown may be omitted, additional components may be present, and different arrangement of the components shown may occur in other implementations.

The components of the UE 800 may be coupled with various other components over one or more interconnects 832, which may represent any type of interface, input/output, bus (local, system, or expansion), transmission line, trace, optical connection, etc. that allows various circuit components (on common or different chips or chipsets) to interact with one another.

The processors 804 may include processor circuitry such as, for example, baseband processor circuitry (BB) 804A, central processor unit circuitry (CPU) 804B, and graphics processor unit circuitry (GPU) 804C. The processors 804 may include any type of circuitry or processor circuitry that executes or otherwise operates computer-executable instructions, such as program code, software modules, or functional processes from memory/storage 812 to cause the UE 800 to perform operations as described herein.

In some embodiments, the baseband processor circuitry 804A may access a communication protocol stack 836 in the memory/storage 812 to communicate over a 3GPP compatible network. In general, the baseband processor circuitry 804A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 808.

The baseband processor circuitry 804A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 812 may include one or more non-transitory, computer-readable media that includes instructions (for example, communication protocol stack 836) that may be executed by one or more of the processors 804 to cause the UE 800 to perform various operations described herein. The memory/storage 812 include any type of volatile or non-volatile memory that may be distributed throughout the UE 800. In some embodiments, some of the memory/storage 812 may be located on the processors 804 themselves (for example, L1 and L2 cache), while other memory/storage 812 is external to the processors 804 but accessible thereto via a memory interface. The memory/storage 812 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 808 may include transceiver circuitry and radio frequency front module (RFEM) that allows the UE 800 to communicate with other devices over a radio access network. The RF interface circuitry 808 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 826 and proceed to filter and amplify (with a low-noise amplifier) the signal. The signal may be provided to a receiver of the transceiver that down-converts the RF signal into a baseband signal that is provided to the baseband processor of the processors 804.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna structure 826.

In various embodiments, the RF interface circuitry 808 may be configured to transmit/receive signals in a manner compatible with NR access technologies.

The antenna structure 826 may include antenna elements to convert electrical signals into radio waves to travel through the air and to convert received radio waves into electrical signals. The antenna elements may be arranged into one or more antenna panels. The antenna structure 826 may have antenna panels that are omnidirectional, directional, or a combination thereof to enable beamforming and multiple-input, multiple-output communications. The antenna structure 826 may include microstrip antennas, printed antennas fabricated on the surface of one or more printed circuit boards, patch antennas, phased array antennas, etc. The antenna structure 826 may have one or more panels designed for specific frequency bands including bands in FR1 or FR2.

In some embodiments, the UE 800 may include the beamforming circuitry 1700 (FIG. 17), where the beamforming circuitry 1700 may be utilized for communication with the UE 800. In some embodiments, components of the UE 800 and the beamforming circuitry may be shared. For example, the antenna structure 826 of the UE may include the panel 1 1704 and the panel 2 1708 of the beamforming circuitry 1700.

The user interface 816 includes various input/output (I/O) devices designed to enable user interaction with the UE 800. The user interface 816 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 800.

The sensors 820 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors;

gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 822 may include software and hardware elements that operate to control particular devices that are embedded in the UE 800, attached to the UE 800, or otherwise communicatively coupled with the UE 800. The driver circuitry 822 may include individual drivers allowing other components to interact with or control various input/output (I/O) devices that may be present within, or connected to, the UE 800. For example, driver circuitry 822 may include a display driver to control and allow access to a display device, a touchscreen driver to control and allow access to a touchscreen interface, sensor drivers to obtain sensor readings of sensors 820 and control and allow access to sensors 820, drivers to obtain actuator positions of electro-mechanic components or control and allow access to the electro-mechanic components, a camera driver to control and allow access to an embedded image capture device, audio drivers to control and allow access to one or more audio devices.

The PMIC 824 may manage power provided to various components of the UE 800. In particular, with respect to the processors 804, the PMIC 824 may control power-source selection, voltage scaling, battery charging, or DC-to-DC conversion.

In some embodiments, the PMIC 824 may control, or otherwise be part of, various power saving mechanisms of the UE 800. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 800 may power down for brief intervals of time and thus save power. If there is no data traffic activity for an extended period of time, then the UE 800 may transition off to an RRC_Idle state, where it disconnects from the network and does not perform operations such as channel quality feedback, handover, etc. The UE 800 goes into a very low power state and it performs paging where again it periodically wakes up to listen to the network and then powers down again. The UE 800 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 828 may power the UE 800, although in some examples the UE 800 may be mounted deployed in a fixed location, and may have a power supply coupled to an electrical grid. The battery 828 may be a lithium ion battery, a metal-air battery, such as a zinc-air battery, an aluminum-air battery, a lithium-air battery, and the like. In some implementations, such as in vehicle-based applications, the battery 828 may be a typical lead-acid automotive battery.

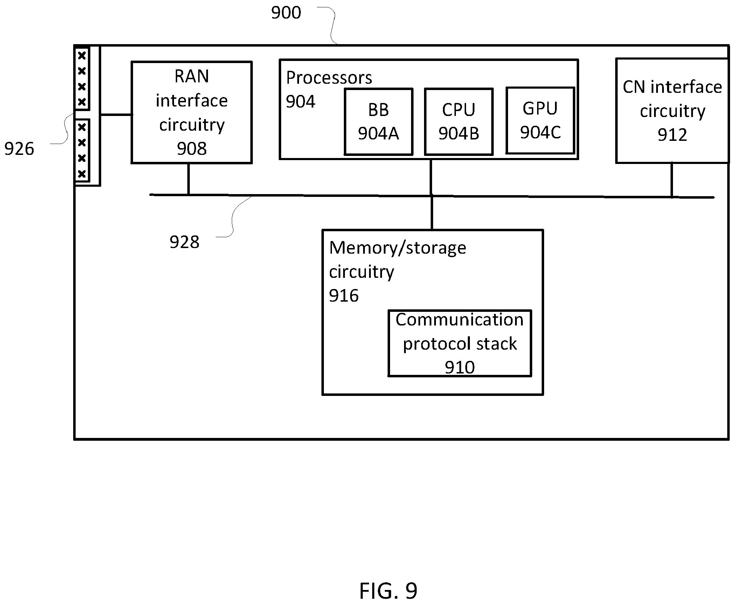

FIG. 9 illustrates an example gNB 900 in accordance with some embodiments. The gNB 900 may include processors 904, RF interface circuitry 908, core network (CN) interface circuitry 912, memory/storage circuitry 916, and antenna structure 926.

The components of the gNB 900 may be coupled with various other components over one or more interconnects 928.

The processors 904, RF interface circuitry 908, memory/storage circuitry 916 (including communication protocol stack 910), antenna structure 926, and interconnects 928 may be similar to like-named elements shown and described with respect to FIG. 25.

The CN interface circuitry 912 may provide connectivity to a core network, for example, a 5th Generation Core network (5GC) using a 5GC-compatible network interface protocol such as carrier Ethernet protocols, or some other suitable protocol. Network connectivity may be provided to/from the gNB 900 via a fiber optic or wireless backhaul. The CN interface circuitry 912 may include one or more dedicated processors or FPGAs to communicate using one or more of the aforementioned protocols. In some implementations, the CN interface circuitry 912 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

Examples

In the following sections, further exemplary embodiments are provided.

Example 1 includes method of operating a base station, the method comprising: detecting an enhanced coverage (EC) condition; generating downlink control information (DCI) with an EC DCI format based on said detecting of the EC condition; and transmitting the DCI to a user equipment (UE) to schedule a second message of a random-access channel (RACH) procedure.

Example 2 includes a method of example 1 or some other example herein, wherein the EC DCI format has a size that is less than a size of a legacy DCI format 1_0 used to schedule a random access response.

Example 3 includes the method of example 1 or some other example herein, wherein the EC DCI format comprises a frequency-domain resource assignment field having a length of $\left\lceil \log_2 \left( \frac{N_{RB}(N_{RB}+1)}{2} \right) \right\rceil$ bits, where $N_{RB}$ is a number of resource blocks in a downlink bandwidth part.

Example 4 includes a method of example 1 or some other example herein, wherein the EC DCI format comprises a time-domain resource assignment (TDRA) field having a value: corresponding to one of a first $2^X$ entries of a cell-specific physical downlink shared channel (PDSCH) TDRA table, where X<=4; or corresponding to an entry of an EC PDSCH TDRA table that has a total number of entries less than or equal to 16.

Example 5 includes a method of example 1 or some other example herein, further comprising: transmitting a system information block type 1 (SIB 1) message to provide an indication of: whether virtual resource block (VRB)-to-physical resource block (PRB) mapping is enabled or disabled for the second message of the RA procedure; or a modulation and coding scheme (MCS) that is to be used for the second message of the RACH procedure.

Example 6 includes the method of example 1 or some other example herein, wherein the EC DCI format comprises a transport block (TB) scaling field having a length of two bits.

Example 7 includes a method of example 1 or some other example herein, further comprising: scrambling cyclic redundancy check (CRC) bits associated with the DCI using a random access (RA)-radio network temporary identity (RNTI), a message B-RNTI, or an R-RA-RNTI.

Example 8 includes a method of example 1 or some other example herein, wherein the EC DCI format includes one or more fixed values.

Example 9 includes the method of example 8 or some other example herein, wherein the one or more fixed values are in a modulation and coding scheme field, a time-domain resource assignment field, a transport block scaling field, a reserved bit field, or a virtual resource block-to-physical resource block mapping field.

Example 10 includes the method of example 1 or some other example herein, further comprising: detecting the EC condition based on: a signal strength of a physical random access channel (PRACH) transmission received from the UE being less than a predetermined threshold; or a dedicated PRACH preamble or a dedicated random access channel occasion being used by the UE.

Example 11 includes a method of operating a UE, the method comprising: processing downlink control information (DCI), the DCI having an enhanced coverage (EC) DCI format; detecting, based on said processing of the DCI, scheduling information associated with a second message of a random-access channel (RACH) procedure; and receiving the second message of the RACH procedure based on the scheduling information.

Example 12 includes the method of example 11 or some other example herein, further comprising: detecting an EC condition; and providing, to a base station, an indication of the EC condition.

Example 13 includes the method of example 12 or some other example herein, wherein detecting the EC condition comprises: determining a number of unsuccessful attempts at decoding a random-access response is greater than a predetermined threshold; determining a distance between the UE and a non-terrestrial network (NTN) access device is greater than a predetermined threshold; determining a distance between the UE and a timing reference point is greater than a predetermined threshold; or determining a reference signal received power of a downlink pathloss reference is less than a predetermined threshold.

Example 14 includes method of example 12 or some other example herein, further comprising: receiving a random-access channel (RACH) configuration that defines an EC PRACH preamble or an EC RACH occasion; and providing the indication by transmitting a PRACH message with the EC PRACH preamble or on the EC RACH occasion.

Example 15 includes a method of example 11 or some other example herein, further comprising: determining the DCI has the EC DCI format based on a detected EC condition or based on a bit set in the DCI.

Example 16 includes the method of example 11 or some other example herein, wherein the second message includes a random access response (RAR) uplink grant for a physical uplink shared channel (PUSCH) transmission and the method further comprises: detecting, separately from the RAR uplink grant, a transmission parameter for the PUSCH transmission, the transmission parameter including a modulation and coding scheme, a transmit power control command, or a channel state information request; transmitting the PUSCH transmission based on the transmission parameter.

Example 17 includes the method of example 16 or some other example herein, further comprising: detecting a value in a modulation and coding scheme (MCS) field of the RAR uplink grant; and determining a number of repetitions of the PUSCH transmission based on the value.

Example 18 includes a method of operating a base station, the method comprising: transmitting downlink control information (DCI) with an enhanced coverage (EC) DCI format to schedule a second message of a random-access channel (RACH) procedure; and transmitting the second message with a plurality of physical downlink shared channel (PDSCH) repetitions.

Example 19 includes the method of example 18 or some other example herein, wherein the plurality of PDSCH repetitions are transmitted in a corresponding plurality of slots.

Example 20 includes the method of example 18 or some other example herein, wherein the plurality of PDSCH repetitions is a first plurality of PDSCH repetitions and the method comprises: determining a second plurality of PDSCH repetitions are to be transmitted using a second plurality of resources; detecting a resource conflict with respect to a first resource of the second plurality of resources that is to be used to transmit a PDSCH repetition of the second plurality of PDSCH repetitions; and dropping the PDSCH repetition or transmitting the PDSCH repetition on a second resource.

Example 21 includes a method of example 18 or some other example herein, wherein transmitting the second message with the plurality of PDSCH repetitions comprises: cycling a redundancy version (RV) used for consecutive PDSCH repetitions based on an RV sequence; or using one redundancy version for all PDSCH repetitions of the plurality of PDSCH repetitions.

Example 22 includes the method of example 18 or some other example herein, further comprising: indicating a value in an uplink grant for a third message of the RACH procedure, wherein a starting slot for the third message of the RACH procedure is based on the value and a reference slot that is a last nominal slot of a PDSCH repetition or is a last actual slot used for transmitting the plurality of PDSCH repetitions.

Example 23 includes the method of example 18 or some other example herein, further comprising: generating the DCI to include a field with an indication of a number of the plurality of PDSCH repetitions, wherein the field is a modulation and coding scheme (MCS) field, a time-domain resource allocation field, or a PDSCH repetition field.

Example 24 includes a method of example 23 or some other example herein, wherein the indication is a bit value that: corresponds to the number, or corresponds to an entry index of a table configured by a system information block (SIB) transmission.

Example 25 includes a method of operating a UE, the method comprising: receiving downlink control information (DCI) with an enhanced coverage (EC) DCI format to schedule a second message of a random-access channel (RACH) procedure with a plurality of physical downlink shared channel (PDSCH) repetitions; and decoding one or more of the plurality of PDSCH repetitions to receive the second message of the RACH procedure.

Example 26 includes a method of example 25 or some other example herein, further comprising: determining, based on a number of the plurality of PDSCH repetitions or a value configured by a system information block (SIB) transmission, a length of a random access response (RAR) window to receive the second message.

Example 27 may include an apparatus comprising means to perform one or more elements of a method described in or related to any of examples 1-26, or any other method or process described herein.

Example 28 may include one or more non-transitory computer-readable media comprising instructions to cause an electronic device, upon execution of the instructions by one or more processors of the electronic device, to perform one or more elements of a method described in or related to any of examples 1-26, or any other method or process described herein.

Example 29 may include an apparatus comprising logic, modules, or circuitry to perform one or more elements of a method described in or related to any of examples 1-26, or any other method or process described herein.

Example 30 may include a method, technique, or process as described in or related to any of examples 1-26, or portions or parts thereof.

Example 31 may include an apparatus comprising: one or more processors and one or more computer-readable media comprising instructions that, when executed by the one or more processors, cause the one or more processors to perform the method, techniques, or process as described in or related to any of examples 1-26, or portions thereof.

Example 32 may include a signal as described in or related to any of examples 1-26, or portions or parts thereof.

Example 33 may include a datagram, information element, packet, frame, segment, PDU, or message as described in or related to any of examples 1-26, or portions or parts thereof, or otherwise described in the present disclosure.

Example 34 may include a signal encoded with data as described in or related to any of examples 1-26, or portions or parts thereof, or otherwise described in the present disclosure.

Example 35 may include a signal encoded with a datagram, IE, packet, frame, segment, PDU, or message as described in or related to any of examples 1-26, or portions or parts thereof, or otherwise described in the present disclosure.

Example 36 may include an electromagnetic signal carrying computer-readable instructions, wherein execution of the computer-readable instructions by one or more processors is to cause the one or more processors to perform the method, techniques, or process as described in or related to any of examples 1-26, or portions thereof.

Example 37 may include a computer program comprising instructions, wherein execution of the program by a processing element is to cause the processing element to carry out the method, techniques, or process as described in or related to any of examples 1-26, or portions thereof.

Example 38 may include a signal in a wireless network as shown and described herein.

Example 39 may include a method of communicating in a wireless network as shown and described herein.

Example 40 may include a system for providing wireless communication as shown and described herein.

Example 41 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method to be implemented by a base station, the method comprising:

   detecting an enhanced coverage, EC, condition;
   generating downlink control information, DCI, with an EC DCI format based on said detecting of the EC condition; and
   transmitting the DCI to a user equipment, UE, to schedule a second message of a random-access channel, RACH, procedure.

2. The method of claim 1, wherein the EC DCI format has a size that is less than a size of a legacy DCI format 1_0 used to schedule a random access response.

3. The method of claim 1 or claim 2, wherein the EC DCI format comprises a frequency-domain resource assignment field having a length of

$$\left\lceil \log_2\left(\frac{N_{RB}(N_{RB}+1)}{2}\right) \right\rceil$$

bits, where $N_{RB}$ is a number of resource blocks in a downlink bandwidth part.

4. The method of any preceding claim, wherein the EC DCI format comprises a time-domain resource assignment, TDRA, field having a value: corresponding to one of a first $2^X$ entries of a cell-specific physical downlink shared channel, PDSCH, TDRA table, where $X<=4$; or corresponding to an entry of an EC PDSCH TDRA table that has a total number of entries less than or equal to 16.

5. The method of any preceding claim, further comprising:
   transmitting a system information block type 1, SIB1, message to provide an indication of: whether virtual resource block, VRB,-to-physical resource block, PRB, mapping is enabled or disabled for the second message of the RA procedure; or a modulation and coding scheme, MCS, that is to be used for the second message of the RACH procedure.

6. The method of any preceding claim, wherein the EC DCI format comprises a transport block, TB, scaling field having a length of two bits.

7. The method of any preceding claim, further comprising:
   scrambling cyclic redundancy check, CRC, bits associated with the DCI using a random access, RA,-radio network temporary identity, RNTI, a message B-RNTI, or a reduced-DCI-payload-size RA-RNTI, R-RA-RNTI.

8. The method of any preceding claim, wherein the EC DCI format includes one or more fixed values, wherein the one or more fixed values are in a modulation and coding scheme field, a time-domain resource assignment field, a transport block scaling field, a reserved bit field, or a virtual resource block-to-physical resource block mapping field.

9. The method of any preceding claim, further comprising:
   detecting the EC condition based on:

   a signal strength of a physical random access channel, PRACH, transmission received from the UE being less than a predetermined threshold; or
   a dedicated PRACH preamble or a dedicated random access channel occasion being used by the UE.

10. One or more computer-readable media having instructions that, when executed by one or more processors, cause a user equipment, UE, to:

    process downlink control information, DCI, the DCI having an enhanced coverage, EC, DCI format;

**EP 4 271 104 A2**

detect, based on said processing of the DCI, scheduling information associated with a second message of a random-access channel, RACH, procedure; and
receive the second message of the RACH procedure based on the scheduling information.

11. The one or computer-readable media of claim 10, wherein the instructions, when executed, further cause the UE to:

detect an EC condition; and
provide, to a base station, an indication of the EC condition,
wherein to detect the EC condition the UE is to:

determine a number of unsuccessful attempts at decoding a random-access response is greater than a predetermined threshold;
determine a distance between the UE and a non-terrestrial network, NTN, access device is greater than a predetermined threshold;
determine a distance between the UE and a timing reference point is greater than a predetermined threshold; or
determine a reference signal received power of a downlink pathloss reference is less than a predetermined threshold.

12. The one or more computer-readable media of claim 10 or claim 11, wherein the instructions, when executed, further cause the UE to:

detect an EC condition; and
provide, to a base station, an indication of the EC condition,
receive a random-access channel, RACH, configuration that defines an EC PRACH preamble or an EC RACH occasion; and
provide the indication by transmitting a PRACH message with the EC PRACH preamble or on the EC RACH occasion.

13. The one or more computer-readable media of any of claims 10 to 12, wherein the instructions, when executed, further cause the UE to:
determine the DCI has the EC DCI format based on a detected EC condition or based on a bit set in the DCI.

14. An apparatus to be implemented in a base station, the apparatus comprising:

radio frequency,(RF, interface circuitry; and
processing circuitry coupled with the RF interface circuitry, the processing circuitry to:

transmit, via the RF interface circuitry, downlink control information, DCI, with an enhanced coverage, EC, DCI format to schedule a second message of a random-access channel, RACH, procedure; and
transmit, via the RF interface circuitry, the second message with a plurality of physical downlink shared channel, PDSCH, repetitions.

15. The apparatus of claim 14, wherein the plurality of PDSCH repetitions is a first plurality of PDSCH repetitions and the processing circuitry is further to:

determine a second plurality of PDSCH repetitions are to be transmitted using a second plurality of resources;
detect a resource conflict with respect to a first resource of the second plurality of resources that is to be used to transmit a PDSCH repetition of the second plurality of PDSCH repetitions; and
drop the PDSCH repetition or transmit the PDSCH repetition on a second resource.

FIG. 1

EP 4 271 104 A2

200

Receiving SIB with RACH configuration
204

Transmitting dedicated PRACH preamble or
other PRACH preamble on dedicated RACH
occasion
208

Receiving DCI with an EC DCI format 1_0
212

FIG. 2

300

Receiving SIB with RACH configuration
304

Transmitting PRACH preamble
308

Failing to receive DCI with legacy DCI format
1_0
312

Transmitting dedicated PRACH preamble or
other PRACH preamble on dedicated RACH
occasion
316

Receiving DCI with an EC DCI format 1_0
320

FIG. 3

FIG. 4

EP 4 271 104 A2

500

```
┌─────────────────────────────────┐
│    Detecting an EC condition     │
│              504                 │
└─────────────────────────────────┘
                 │
                 ▼
┌─────────────────────────────────┐
│  Generating DCI with EC DCI format │
│              508                 │
└─────────────────────────────────┘
                 │
                 ▼
┌─────────────────────────────────┐
│                                  │
│    Transmitting the DCI to a UE  │
│              512                 │
│                                  │
└─────────────────────────────────┘
```

FIG. 5

600

```
┌─────────────────────────────────────┐
│          Processing DCI              │
│              604                     │
└─────────────────────────────────────┘
                   │
                   ▼
┌─────────────────────────────────────┐
│  Detecting scheduling information    │
│  associated with second message of   │
│  RACH procedure based on DCI         │
│              608                     │
└─────────────────────────────────────┘
                   │
                   ▼
┌─────────────────────────────────────┐
│                                      │
│      Receiving the second message    │
│              612                     │
│                                      │
└─────────────────────────────────────┘
```

FIG. 6

700

```
┌─────────────────────────────────────┐
│   Transmitting DCI with EC DCI format to   │
│  schedule second message of RACH procedure │
│                  704                 │
└─────────────────────────────────────┘
                    │
                    ▼
┌─────────────────────────────────────┐
│   Transmitting the second message with a   │
│       plurality of PDSCH repetitions       │
│                  708                 │
└─────────────────────────────────────┘
```

FIG. 7

FIG. 8

900

Processors
904

BB
904A

CPU
904B

GPU
904C

RAN interface circuitry
908

CN interface circuitry
912

Memory/storage circuitry
916

Communication protocol stack
910

928

926

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63336814